# EUROPÄISCHE PATENTSCHRIFT

(11) **EP 4 141 606 B1**
(45) Veröffentlichungstag und Bekanntmachung des Hinweises auf die Patenterteilung: **28.05.2025**
(21) Anmeldenummer: 22185873.1
(22) Anmeldetag: 19.07.2022
(51) Int. Cl.: G05D 1/00

(54) **VERFAHREN UND VORRICHTUNG ZUR FÜHRUNG EINES FAHRZEUGS MIT GRUND MARKIERUNGEN**
METHOD AND DEVICE FOR GUIDING A VEHICLE WITH GROUND MARKS
PROCÉDÉ ET DISPOSITIF DE GUIDAGE D'UN VÉHICULE PAR MARQUAGE AU SOL

(30) Priorität: 23.08.2021 DE 102021209241
(43) Veröffentlichungstag der Anmeldung: 01.03.2023
(73) Patentinhaber: Pepperl+Fuchs SE, 68307 Mannheim (DE)
(72) Erfinder: Siebert, Gerhard, 67227 Frankenthal (DE)
(74) Vertreter: Ullrich & Naumann PartG mbB

(56) Entgegenhaltungen:
- EP-A1- 3 153 940
- EP-A2- 2 284 636
- WO-A1-2013/177163
- DE-A1- 102017 006 630
- US-A1- 2006 064 212
- US-B1- 8 078 349

## Beschreibung

Die Erfindung betrifft ein Verfahren zur Führung eines Fahrzeugs auf einem Untergrund, wobei das Fahrzeug mittels einer auf dem Untergrund zumindest abschnittsweise angeordneten Code-Anordnung, die einen oder mehrere Codes aufweist, und/oder wobei das Fahrzeug mittels einer auf dem Untergrund zumindest abschnittsweise angeordneten streifenförmigen Markierung, die eine Spur oder mehrere Spuren aufweist, und mittels eines zur Erkennung der Code-Anordnung und/oder der streifenförmigen Markierung ausgebildeten und dem Fahrzeug zugeordneten Detektors entlang einer vorbestimmbaren Strecke geführt wird, wobei eine Führung des Fahrzeugs mittels der Code-Anordnung und/oder eine Führung des Fahrzeugs mittels der streifenförmigen Markierung - in Abhängigkeit von mindestens einem vorgebbaren Parameter - durch eine Steuereinrichtung aktiviert oder deaktiviert wird.

Des Weiteren betrifft die vorliegende Erfindung eine Vorrichtung zur Führung eines Fahrzeugs auf einem Untergrund, insbesondere zur Durchführung des Verfahrens nach einem der Ansprüche 1 bis 11, wobei das Fahrzeug mittels einer auf dem Untergrund zumindest abschnittsweise angeordneten Code-Anordnung, die einen oder mehrere Codes aufweist, und/oder wobei das Fahrzeug mittels einer auf dem Untergrund zumindest abschnittsweise angeordneten streifenförmigen Markierung, die eine Spur oder mehrere Spuren aufweist, und mittels eines zur Erkennung der Code-Anordnung und/oder der Markierung ausgebildeten und dem Fahrzeug zugeordneten Detektors entlang einer vorbestimmbaren Strecke führbar ist, wobei eine Führung des Fahrzeugs mittels der Code-Anordnung und/oder mittels der streifenförmigen Markierung - in Abhängigkeit von mindestens einem vorgebbaren Parameter - durch eine Steuereinrichtung aktivierbar oder deaktivierbar ist.

Verfahren und Vorrichtungen der eingangs genannten Art, bei denen ein Fahrzeug auf einem Untergrund geführt wird, sind aus der Praxis bekannt und existieren in unterschiedlichen Ausführungsformen. Derartige Fahrzeuge finden ihre Anwendung beispielsweise als fahrerlose Transportsysteme, FTS, in vielen Bereichen der modernen Produktion, beispielsweise in der Automobilindustrie, die durch einen hohen Wandlungs- und Automatisierungsgrad gekennzeichnet ist. So übernehmen eine Vielzahl fahrerloser Transportsysteme unterschiedliche, innerbetriebliche Transportaufgaben und leisten damit einen entscheidenden Beitrag, die Geschwindigkeit, Sicherheit und Kosteneffizienz im laufenden Betrieb zu optimieren. Vor allem im Kontext von Industrie 4.0 erleben FTS einen regelrechten Hype und verhelfen nicht nur Automobilherstellern zu schlanken, agilen Produktionsanlagen.

Des Weiteren ist es bekannt, Markierungen auf einem Untergrund, beispielsweise ein Untergrund in Form eines Bodens in einer Industriehalle, aufzubringen, wobei die Markierung in Form einer Farbspur - auch in schwarz - realisiert werden kann, die mit einem geeigneten Detektor erkannt und zur Führung des Fahrzeugs verwendet wird. Entsprechende bekannte Systeme arbeiten mit derartigen Kontrastspuren. Üblich ist dabei ein heller Hintergrund mit einer schwarzen Spur. Diese Spurführung ist allerdings oft nicht von einer "falschen Spur" zu unterscheiden, die beispielsweise durch eine identisch aussehende schmale dunkle Bremsspur auf hellem Hintergrund bzw. Untergrund gebildet sein kann. Derartige "falsche Spuren" können auch durch beispielsweise Rillen oder Dehnfugen gebildet sein, in denen sich Schmutz angesammelt hat. In einem ungünstigen Fall erkennt der Detektor dies als richtige Spur und führt ein Fahrzeug in eine falsche Richtung. Im Ergebnis ist die bekannte Führung eines Fahrzeugs auf einem Untergrund fehleranfällig und unzuverlässig.

Des Weiteren ist es bekannt, Positionsbestimmungen mittels Codebänder durchzuführen, wobei derartige Codebänder mehrere nacheinander angeordnete Codes, beispielsweise Datamatrix-Codes, aufweisen. Es erfordert einen relativ hohen Aufwand, solche Codebänder vor Verschleiß zu schützen. Daher werden in stark belasteten Bereichen oder in Bereichen, in denen keine absolute Positionsbestimmung erforderlich ist, gerne streifenförmige Markierungen mit Spuren oder Farbspuren verwendet, um die Führung eines Fahrzeugs sicherzustellen. Hierfür muss üblicherweise ein zusätzlicher Detektor in Form beispielsweise eines Lesekopfs im Fahrzeug realisiert werden, der farbempfindlich ist. Für die Erkennung der Codes genügt ein Detektor in Form beispielsweise eines Lesekopfs, der monochrom arbeitet. Für einen solchen monochromen Detektor sehen unterschiedliche Farben von Farbspuren nicht selten identisch aus, da sie in der gleichen Graustufe erkannt werden.

Aus der WO 2013/177163 A1 sind ein Verfahren und eine Vorrichtung zur Führung eines Fahrzeugs auf einem Untergrund mit allen Merkmalen der Oberbegriffe der Ansprüche 1 und 12 bekannt.

Des Weiteren sind auch aus der DE 10 2017 006 630 A1, der US 8 078 349 B1, der US 2006/064212 A1 und der EP 3 153 940 A1 Verfahren und Vorrichtungen zur Führung eines Fahrzeugs auf einem Untergrund bekannt.

Der vorliegenden Erfindung liegt die Aufgabe zugrunde, ein Verfahren sowie eine Vorrichtung zur Führung eines Fahrzeugs auf einem Untergrund anzugeben, wonach eine besonders sichere und flexible Führung eines Fahrzeugs auf einem Untergrund mit konstruktiv einfachen Mitteln ermöglicht ist.

Erfindungsgemäß wird die voranstehende Aufgabe durch ein Verfahren mit den Merkmalen des Anspruchs 1 sowie durch eine Vorrichtung mit den Merkmalen des Anspruchs 12 gelöst.

Danach ist das Verfahren gemäß Anspruch 1 derart ausgestaltet und weitergebildet, dass durch die Steuereinrichtung die Erkennung der Code-Anordnung deaktiviert wird, falls eine Führung des Fahrzeugs mittels der streifenförmigen Markierung erfolgt, und dass durch die Steuereinrichtung die Erkennung der Code-Anordnung aktiviert wird, sobald zumindest in einem definierbaren Teilbereich eines Lesefensters des Detektors keine durchgehende streifenförmige Markierung oder keine streifenförmige Markierung erkannt wird.

Des Weiteren ist gemäß Anspruch 12 die Vorrichtung zur Führung eines Fahrzeugs auf einem Untergrund derart ausgestaltet und weitergebildet, dass durch die Steuereinrichtung die Erkennung der Code-Anordnung deaktivierbar ist, falls eine Führung des Fahrzeugs mittels der streifenförmigen Markierung erfolgt, und dass durch die Steuereinrichtung die Erkennung der Code-Anordnung aktivierbar ist, sobald zumindest in einem definierbaren Teilbereich eines Lesefensters des Detektors keine durchgehende streifenförmige Markierung oder keine streifenförmige Markierung erkannt wird.

In erfindungsgemäßer Weise ist erkannt worden, dass die voranstehende Aufgabe durch einen geeigneten Einsatz der zur Verfügung stehenden Führungstechnik eines Fahrzeugs auf überraschend einfache Weise gelöst wird. Hierzu wird eine Führung des Fahrzeugs mittels der Code-Anordnung und/oder mittels der streifenförmigen Markierung durch eine Steuereinrichtung aktiviert oder deaktiviert, wobei dieser Vorgang der Aktivierung oder Deaktivierung in Abhängigkeit von mindestens einem vorgebbaren Parameter erfolgt. So können unterschiedliche Umgebungsbedingungen, beispielsweise klimatische Bedingungen oder zu Verschleiß des Bodens führende Belastungsbedingungen zu unterschiedlichen Verwendungen einerseits der Führung mittels der Code-Anordnung und andererseits der Führung mittels der streifenförmigen Markierung führen, wobei auch die Code-Anordnung und die streifenförmige Markierung gemeinsam zur Führung des Fahrzeugs verwendet werden können. Die Steuereinrichtung kann somit in Abhängigkeit von dem mindestens einen vorgebbaren Parameter eine Aktivierung oder Deaktivierung der Art der Führung des Fahrzeugs auf flexible Art und Weise auch bei einem sich verändernden vorgebbaren Parameter veranlassen. Ein an nahezu jede Situation angepasstes Wechselspiel zwischen einer Führung des Fahrzeugs mittels der Code-Anordnung oder mittels der streifenförmigen Markierung ist möglich. Hierbei ist eine absolute Positionierung und Navigation des Fahrzeugs auf flexible Weise ermöglicht.

In erfindungsgemäßer Weise wird durch die Steuereinrichtung die Erkennung der Code-Anordnung deaktiviert, falls eine Führung des Fahrzeugs mittels der streifenförmigen Markierung erfolgt. Hierdurch wird Performance gespart und damit die Zuverlässigkeit der Vorrichtung erhöht.

Weiterhin wird gemäß der Erfindung durch die Steuereinrichtung die Erkennung der Code-Anordnung aktiviert, sobald zumindest in einem definierbaren Teilbereich eines Lesefensters des Detektors keine durchgehende streifenförmige Markierung oder keine streifenförmige Markierung erkannt wird. Hierdurch wird ein besonders sicherer Betrieb des Verfahrens bzw. der Vorrichtung gewährleistet, da insbesondere durch eine quasi automatische Umschaltung von Führung des Fahrzeugs mittels streifenförmiger Markierung auf Führung des Fahrzeugs mittels Code-Anordnung eine sichere Führung des Fahrzeugs kontinuierlich gewährleistet bleibt. Dabei kann die Funktion der Führung des Fahrzeugs mittels streifenförmiger Markierung aktiv bleiben, um gegebenenfalls schnell wieder von der Führung mittels Code-Anordnungen auf die Führung mittels streifenförmiger Markierung umzuschalten.

Folglich sind mit dem erfindungsgemäßen Verfahren und der erfindungsgemäßen Vorrichtung ein Verfahren und eine Vorrichtung bereitgestellt, wonach eine besonders sichere und flexible Führung eines Fahrzeugs auf einem Untergrund mit konstruktiv einfachen Mitteln ermöglicht ist.

Im Hinblick auf eine besonders flexible Führung des Fahrzeugs kann durch die Steuereinrichtung die Erkennung der Code-Anordnung vor der Erkennung der streifenförmigen Markierung priorisiert werden oder umgekehrt. Dabei führt die Priorisierung der Erkennung der Code-Anordnung zu einer besonders sicheren Positionsbestimmung des Fahrzeugs. Hierbei haben Codes also grundsätzlich Priorität. Hierbei und auch ganz grundsätzlich kann bei Erkennung eines Codes oder einer Code-Anordnung die Erkennung der streifenförmigen Markierung abgeschaltet werden. Somit kann die volle Performance des Detektors für die Erkennung der Codes oder der Code-Anordnung genutzt werden, um auch unter schwierigen äußeren Bedingungen wie beispielsweise Verschmutzung die Codes oder die Code-Anordnung zu erkennen. Die Priorisierung der streifenförmigen Markierung kann je nach Situation alternativ hierzu gewählt werden, um Performance des Detektors oder eines Lesekopfs zu sparen. Der vorgebbare Parameter kann somit durch die Wahl der Priorisierung realisiert sein.

Hinsichtlich einer besonders sicheren Führung des Fahrzeugs kann durch die Steuereinrichtung die Erkennung der streifenförmigen Markierung durch den Detektor aktiviert werden, sobald der Detektor keinen Code mehr erkennt. Bei beispielsweise einer Verschmutzung oder Beschädigung einer Code-Anordnung oder eines Codes durch Verschleiß kann hiermit eine sichere Führung des Fahrzeugs gewährleistet werden, wobei hierbei quasi eine automatische Umschaltung von Führung mittels Code-Anordnung auf Führung mittels streifenförmiger Markierung erfolgen kann. Der vorgebbare Parameter kann hierbei durch die Erkennungsfähigkeit und/oder Empfindlichkeit des Detektors gebildet sein.

Bei einem weiteren Ausführungsbeispiel kann durch die Steuereinrichtung die Erkennung der streifenförmigen Markierung deaktiviert werden, sobald der Detektor einen oder mehrere Codes erkennt. Insbesondere in einem Fall, in dem die Führung des Fahrzeugs gerade mittels der streifenförmigen Markierung erfolgt, kann dieses Merkmal zum Tragen kommen, sodass hierbei wiederum eine Priorisierung der Führung mittels Code-Anordnung die Folge sein kann.

Im Hinblick auf eine besonders zuverlässige und sichere Führung eines Fahrzeugs kann ein Bildbereich oder Erkennungsbereich des Detektors für einen oder mehrere Codes - vorzugsweise während einer Führung des Fahrzeugs mittels der streifenförmigen Markierung - auf einen Endbereich der streifenförmigen Markierung oder einen - in einer Fahrtrichtung des Fahrzeugs entlang der Strecke gesehen - vorderen Bereich eines Lesefensters des Detektors begrenzt werden. Durch eine derartige Begrenzung kann Performance des Detektors und/oder einer Auswerteeinrichtung des Detektors eingespart werden, da nicht der vollständige Bildbereich oder Erkennungsbereich des Detektors oder nicht das vollständige Lesefenster für die Erkennung von Codes bereit sein muss. Dies führt zu einer weniger ausgelasteten Hardware in Form des Detektors und/oder der Auswerteeinrichtung und damit insgesamt zu einem zuverlässigeren Betrieb des Verfahrens bzw. der Vorrichtung. Dabei bedeutet eine Begrenzung auf einen Endbereich der streifenförmigen Markierung, dass nicht die komplette mittels des Lesefensters sichtbare streifenförmige Markierung auf vorhandene Codes mittels des Detektors untersucht wird, sondern lediglich ein in Fahrtrichtung gesehen vorderer Endbereich der gerade im Lesefenster des Detektors befindlichen streifenförmigen Markierung, da während einer Bewegung des Fahrzeugs in Fahrtrichtung Codes meist von - in Fahrtrichtung gesehen - vorne in das Lesefenster eintreten. Falls die Performance des Detektors und/oder einer Auswerteeinrichtung jedoch ausreicht, kann auf diese Begrenzung verzichtet werden.

Im Hinblick auf eine konstruktiv einfache und sichere Führung des Fahrzeugs kann die Begrenzung mittels der Steuereinrichtung erfolgt. Die Steuereinrichtung kann auch zumindest einen Teil einer Auswerteeinrichtung umfassen, sodass die Anzahl an Bauteilen einer Vorrichtung zur Durchführung des Verfahrens in einfacher und kostengünstiger Weise möglichst klein gehalten werden kann.

Bei einem weiteren Ausführungsbeispiel können alternative oder zusätzliche Codes seitlich einer streifenförmigen Markierung angeordnet sein. Derartige Codes werden häufig als Control-Codes bezeichnet. In einen solchen Fall kann durch die Steuereinrichtung eine Erkennung von Codes durch den Detektor nur in einem - in einer Fahrtrichtung des Fahrzeugs entlang der Strecke gesehen - linken und/oder rechten Bereich eines Lesefensters des Detektors - je nachdem, ob derartige Codes links und/oder rechts neben der streifenförmigen Markierung realisiert sind - aktiviert werden. Durch eine derartige Beschränkung auf einen linken und/oder rechten Bereich eines Lesefensters kann Performance des Detektors und/oder einer Auswerteeinrichtung eingespart werden, um diese Hardware im Betrieb nicht völlig auszulasten bzw. zu überlasten.

Bei einem weiteren Ausführungsbeispiel kann zur Erkennung der Markierung auf dem Untergrund die Code-Anordnung und/oder die Markierung mittels einer Beleuchtungseinrichtung mit einem ersten Beleuchtungslicht und einem zweiten Beleuchtungslicht unterschiedlicher Wellenlänge und jeweils vorgebbarer Zeitdauer in einer vorgebbaren Reihenfolge beleuchtet werden, wobei die Wellenlänge des ersten Beleuchtungslichts und die Wellenlänge des zweiten Beleuchtungslichts derart gewählt werden können, dass die Code-Anordnung und/oder die Markierung für den Detektor aufgrund ihres definierbaren Remissionsspektrums bei Beleuchtung mit dem ersten Beleuchtungslicht mit einer Helligkeit oder Dunkelheit erkennbar ist, die sich von der Helligkeit oder Dunkelheit bei Beleuchtung mit dem zweiten Beleuchtungslicht unterscheidet, und kann ein durch den Detektor ermitteltes entsprechendes Detektionsergebnis zur Führung des Fahrzeugs entlang der Strecke verwendet werden. Hierbei ist eine Beleuchtung realisiert, die die Markierung mit einem ersten Beleuchtungslicht und einem zweiten Beleuchtungslicht unterschiedlicher Wellenlänge und jeweils vorgebbarer Zeitdauer in einer vorgebbaren Reihenfolge beleuchtet. Dabei sind in vorteilhafter Weise die Wellenlänge des ersten Beleuchtungslichts und die Wellenlänge des zweiten Beleuchtungslichts derart gewählt, dass die Markierung für den Detektor aufgrund ihres durch ihre Ausgestaltung vorliegenden und definierbaren Remissionsspektrums für Beleuchtungslicht bei Beleuchtung mit dem ersten Beleuchtungslicht mit einer Helligkeit oder Dunkelheit erkennbar ist, die sich von der Helligkeit oder Dunkelheit bei Beleuchtung mit dem zweiten Beleuchtungslicht unterscheidet. Der Detektor kann dabei erkennen, ob die Markierung mit dem ersten oder mit dem zweiten Beleuchtungslicht beleuchtet wird, wobei es bei der Wahl des ersten und zweiten Beleuchtungslichts ein Ziel sein kann, den Unterschied in der Helligkeit oder Dunkelheit, der durch den Wechsel vom ersten Beleuchtungslicht zum zweiten Beleuchtungslicht oder umgekehrt erzeugt wird, möglichst groß und vorzugsweise möglichst kontrastreich zu gestalten. Bei einer einen Code mit unterschiedlichen Farbelementen aufweisenden Markierung kann es somit ein Ziel sein, mit dem einen Beleuchtungslicht eine Farbe des Codes möglichst dunkel und eine andere Farbe möglichst hell oder umgekehrt darzustellen. Mit dem anderen Beleuchtungslicht kann es sich hierzu komplementär verhalten. Ziel kann es hierbei sein, einen möglichst hohen Kontrast zwischen einer dunklen und einer hellen Abbildung unter einer jeweiligen Beleuchtungsfarbe oder unter einem jeweiligen Beleuchtungslicht zu erzielen. Durch diese vorgebbare Beleuchtungsabfolge mit dem ersten Beleuchtungslicht und dem zweiten Beleuchtungslicht wird eine definierte Remission von der Markierung erzeugt, die von dem Detektor empfangen wird. Der Detektor kann dieses Detektionsergebnis - beispielsweise mittels einer geeigneten Steuereinrichtung oder Führungseinrichtung - zur Führung des Fahrzeugs entlang der Strecke verwenden, wobei er das empfangene Detektionsergebnis mit dem ihm - beispielsweise durch die obige Steuereinrichtung oder Führungseinrichtung oder eine geeignete weitere Steuereinrichtung - bekannt gegebenen und aufgrund der definierten Remission zu erwartenden Detektionsergebnis vergleichen kann. Entspricht das empfangene Detektionsergebnis dem erwarteten Detektionsergebnis, so befindet sich das Fahrzeug auf oder entlang der vorbestimmbaren, richtigen Strecke und kann entsprechend korrekt entlang der vorbestimmbaren Strecke weitergeführt werden. Hierbei kann eine Positionsbestimmung des Detektors oder Fahrzeugs relativ zur Markierung erfolgen. Falls das empfangene Detektionsergebnis dem erwarteten Detektionsergebnis nicht entsprechen sollte, so kann - beispielsweise mit der obigen Steuereinrichtung oder Führungseinrichtung - eine Korrektur hinsichtlich der Führung erfolgen, um das Fahrzeug wieder auf korrekten Kurs entlang der vorbestimmbaren Strecke zu bringen. Letztendlich kann hierdurch eine eindeutige Identifizierung oder Erkennung einer Markierung oder Spur mit einer Abgrenzung gegen "falsche Markierungen" oder "falsche Spuren" erfolgen. Hierdurch ist eine besonders sichere Führung eines Fahrzeugs auf einem Untergrund mit konstruktiv einfachen Mitteln ermöglicht.

Hinsichtlich eines besonders einfachen Ausführungsbeispiels des Verfahrens kann die Markierung für den Detektor aufgrund ihres definierbaren Remissionsspektrums bei Beleuchtung mit dem ersten Beleuchtungslicht erkennbar und bei Beleuchtung mit dem zweiten Beleuchtungslicht nicht erkennbar oder umgekehrt sein. Hiermit ist ein besonders großer Unterschied bei einer Beleuchtung mit dem ersten Beleuchtungslicht und bei einer Beleuchtung mit dem zweiten Beleuchtungslicht für den Detektor erzeugt.

Im Hinblick auf eine besonders zuverlässige und sichere Führung des Fahrzeugs kann anhand des Detektionsergebnisses bestimmt werden, ob sich das Fahrzeug noch in einem definierbaren räumlichen oder flächigen Bereich um die Code-Anordnung und/oder die Markierung oder noch in einem definierbaren Abstand zur Code-Anordnung und/oder Markierung befindet. Ein derartiger Bereich oder Abstand kann in Abhängigkeit vom jeweiligen Anwendungsfall und den jeweiligen Umgebungsbedingungen, beispielsweise eine räumliche Enge, weiter oder enger definiert werden. Zur Realisierung einer möglichst geringen versehentlichen Abweichung der Bewegung des Fahrzeugs von der vorbestimmbaren Strecke und damit einer möglichst exakten Führung des Fahrzeugs entlang der Strecke kann der Bereich oder Abstand relativ klein gewählt werden.

In konstruktiv besonders einfacher Weise kann der Detektor eine monochrome Kamera aufweisen, mit der zu vorgebbaren Zeitpunkten eine oder mehrere Bildaufnahmen der streifenförmigen Markierung durchführbar sind. Eine solche Kamera kann auch auf einfache und ökonomische Weise zum Erkennen und/oder Auslesen von auf dem Untergrund angeordneten Codes zur Positionsbestimmung dienen. Insoweit kann die monochrome Kamera des Detektors eine Doppelfunktion übernehmen und es ist in kostengünstiger Weise nicht erforderlich, zwei separate Kameras für einerseits eine Führung und andererseits eine Positionsbestimmung zu verwenden.

Zur Realisierung einer besonders einfachen und sicheren Führung des Fahrzeugs kann die Beleuchtungseinrichtung dem Fahrzeug zugeordnet, an dem Fahrzeug angeordnet oder in das Fahrzeug integriert sein. Damit lässt sich eine besonders kompakte Vorrichtung zur Führung eines Fahrzeugs ohne eine von dem Fahrzeug gegebenenfalls weit beabstandete Beleuchtungseinrichtung realisieren. Bei einer weiteren Ausführungsform kann die Beleuchtungseinrichtung jedoch auch separat vom Fahrzeug an geeigneter Position entlang der Strecke realisiert sein.

Weiterhin im Hinblick auf eine besonders kompakte und damit einfach handhabbare Vorrichtung und ein einfach handhabbares Verfahren kann die Beleuchtungseinrichtung integral mit dem Detektor oder in einem Modul mit dem Detektor ausgebildet sein. Hierbei kann ein integraler Beleuchtungs-/Detektorkopf realisiert werden, der sowohl die Beleuchtungseinrichtung als auch den Detektor aufweist. Dabei kann der Detektor

Im Hinblick auf eine besonders sichere Führung eines Fahrzeugs kann die Markierung in konstruktiv einfacher Weise streifenförmig mit einer Spur oder einem Streifen oder mehreren Spuren oder Streifen ausgebildet sein, wobei vorzugsweise sich die streifenförmige Markierung parallel zu der Strecke erstreckt. Alternativ hierzu kann sich die streifenförmige Markierung oder können sich die Spuren oder Streifen auch quer oder schräg zur Fahrtrichtung erstrecken Derartige streifenförmige Markierungen lassen sich üblicherweise einfach mit einem Detektor erkennen.

In besonders vorteilhafter Weise können die mehreren Spuren oder Streifen unterschiedliche Remissionsspektren aufweisen. Hierdurch lässt sich eine besonders individuelle und damit aussagekräftige Kombination aus Beleuchtung und Remission erzeugen, um eine besonders sichere Identifizierung einer oder mehrerer Markierungen oder Spuren oder Streifen mittels des Detektors zu gewährleisten.

Bei einer konkreten Ausführungsform können bei der Verwendung von drei nebeneinander verlaufenden Spuren oder Streifen zwei Spuren oder Streifen - vorzugsweise die beiden äußeren Spuren oder Streifen - dasselbe Remissionsspektrum aufweisen. Mittels dreier nebeneinander verlaufender Spuren oder Streifen lässt sich eine besonders starke Unabhängigkeit von einer Farbe des Untergrunds oder Bodens und damit eine besonders sichere Identifizierung einer oder mehrerer Markierungen oder Spuren oder Streifen mittels des Detektors realisieren.

Weiterhin im Hinblick auf eine besonders sichere Identifizierung einer oder mehrerer Markierungen oder Spuren oder Streifen und damit im Hinblick auf eine besonders sichere Führung eines Fahrzeugs kann der Detektor die Anzahl der einzelnen Spuren oder Streifen und/oder die Breite der einzelnen Spuren oder Streifen erkennen. Hierdurch ist bei Bekanntheit der Anzahl und/oder Breite der einzelnen Spuren oder Streifen eine besonders gute Abgrenzung gegen "falsche Markierungen" oder "falsche Spuren oder Streifen" möglich, die bezüglich Anzahl und/oder Breite oft stark variieren.

In weiter vorteilhafter Weise kann die Markierung einzelne Codeelemente aufweisen. Hierdurch kann eine ökonomische Kombination von Markierungen zur Führung und Codeelementen zur Positionsbestimmung realisiert werden. Beispielsweise bei begrenztem Raumbedarf auf einem Untergrund ist eine solche Kombination vorteilhaft.

Ganz grundsätzlich kann eine Positionsbestimmung des Fahrzeugs und/oder des Detektors relativ zu der Markierung, insbesondere zu einer Spur oder einem Streifen, erfolgen. Hierbei ist eine Positionierung oder Positionsbestimmung anhand der Markierung oder anhand einer Spur oder eines Streifens in Querrichtung - Y-Richtung - zur Spurrichtung oder Fahrtrichtung - X-Richtung - des Fahrzeugs vorteilhaft. Eine hieraus folgende Y-Position kann die Navigation mittels der Markierung, insbesondere anhand einer Spur oder eines Streifens, auf sichere Weise ermöglichen. Grundsätzlich wird mit einer Positionsbestimmung das Ziel erreicht, eine Y-Position, d. h. eine Position quer zu einer Spur oder einem Streifen, sicher zu erhalten, welche sich je nach Beleuchtung oder bei sich veränderndem Beleuchtungslicht nicht ändert.

Im Hinblick auf die Realisierung eines besonders individuellen Beleuchtungsszenarios kann die vorgebbare Reihenfolge an erstem und zweitem Beleuchtungslicht eine unregelmäßige Abfolge oder einen unregelmäßigen Wechsel von erstem und zweitem Beleuchtungslicht aufweisen. Hierdurch ist eine besonders sichere Identifizierung einer Markierung und damit Führung eines Fahrzeugs möglich.

Grundsätzlich gibt es unterschiedliche Möglichkeiten, eine Beleuchtung mittels der Beleuchtungseinrichtung zu realisieren. Bei einem konkreten Ausführungsbeispiel können oder kann das erste und/oder das zweite Beleuchtungslicht monochromatisch sein oder ist oder mehrere Wellenlängen oder ein Wellenlängenspektrum aufweisen. Hierbei ist auf den jeweiligen Anwendungsfall abzustellen. Bei einem monochromatischen Beleuchtungslicht ist eine besonders zuverlässige und sichere Erkennung von Markierungen mittels des Detektors möglich.

Bei einem konkreten Ausführungsbeispiel kann der Code ein Datamatrix-Code oder können die Codes Datamatrix-Codes sein. Es sind jedoch auch je nach Anwendungsfall andere Typen von Codes möglich.

Vorteilhafte Aspekte und Eigenschaften von Ausführungsbeispielen der vorliegenden Erfindung:
Der im Rahmen des Verfahrens und der Vorrichtung verwendete Detektor kann ein Kamerasystem mit einer monochromen Kamera aufweisen. Eine Farbkamera ist nicht erforderlich. D. h., es werden Bilder in Graustufen aufgenommen. Grundsätzlich ist damit keine eindeutige Farberkennung für eine Führung eines Fahrzeugs oder eine Spurverfolgung möglich. Viele, durchaus unterschiedliche Farben werden mit den gleichen Grauwerten dargestellt. Somit werden weitere Merkmale für eine Spurverfolgung verwendet.

So können beispielsweise zwei Beleuchtungsfarben bzw. Beleuchtungswellenlängen verwendet werden, die abwechselnd oder in einer vorgebbaren Reihenfolge und Zeitdauer angeschaltet und abgeschaltet werden können. Diese Farbumschaltung bzw. Wellenlängenumschaltung wird bei der Erkennung der Markierung oder Spurerkennung genutzt. Durch die wechselnde Beleuchtung werden Teile der Markierung oder die gesamte Markierung ausgeblendet oder eingeblendet und es entstehen je nach Beleuchtungsfarbe bzw. Beleuchtungswellenlängen unterschiedliche Bilder bei einer Bildaufnahme durch den Detektor oder die Kamera. Ein entsprechend gewählter Detektor oder ein entsprechend gewählter Decoder in dem Detektor oder eine entsprechend gewählte Auswerteeinrichtung in dem Detektor oder in der Kamera weiß nicht, welche Beleuchtungsfarbe oder Beleuchtungswellenlänge für die Markierung von einem Sicherheits-Chip oder von einer entsprechenden Steuereinrichtung gewählt worden ist, sondern kann diese Information lediglich aus dem Bild bzw. der Bildaufnahme und den entsprechend gelesenen Informationen ableiten. Somit fungiert der Detektor, der Decoder, die Auswerteeinrichtung oder die Kamera quasi als ein "schwarzer Kanal" zwischen einer sicheren Information in einer Markierung und einem Sicherheits-Chip oder einer entsprechenden Steuereinrichtung, der oder die das Verfahren oder die Auswertung von Sicherheitsfunktionen durchführt.

Bei Ausführungsbeispielen der vorliegenden Erfindung können beispielsweise zwei Farben von Codeelementen oder Codes oder Bändern oder Spuren genutzt werden, um ein mehrfarbiges Spurband oder eine mehrfarbige Markierung oder Spur zu definieren. Hierzu können zwei oder drei farbige Bänder oder Streifen nebeneinander auf einem Untergrund oder Boden aufgebracht werden. Die wechselnde Beleuchtung kann hierbei nun einen Szenenwechsel je nach Beleuchtungslicht oder Beleuchtung erzeugen und die Markierung oder Spur kann damit eindeutig identifiziert werden. Dabei kann - nach einer initialen Erkennung der Markierung oder Spur - mit jedem aufgenommenen Bild oder jedem einzelnen Detektionsvorgang die Position der Markierung oder Spur bestimmbar sein.

Mit Ausführungsbeispielen der vorliegenden Erfindung ist eine eindeutige Erkennung einer Markierung oder korrekten Spur durch ständig wechselnde Bilder möglich. "Falsche Spuren" werden eindeutig herausgefiltert, da diese sich in der Regel nicht signifikant mit der Beleuchtungsfarbe ändern.

Nach einem Farbwechsel der Beleuchtung durch einen übergeordneten Sicherheits-Chip kann eine Spur eindeutig erkannt werden und kann das Fahrzeug über eine Y-Abweichung zur Spurmitte navigiert werden.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung bevorzugter Ausführungsbeispiele des erfindungsgemäßen Verfahrens sowie der erfindungsgemäßen Vorrichtung anhand der Zeichnung zu verweisen. In Verbindung mit der Erläuterung der bevorzugten Ausführungsbeispiele anhand der Zeichnung werden auch im Allgemeinen bevorzugte Ausgestaltungen und Weiterbildungen der Lehre erläutert. In der Zeichnung zeigen
- Fig. 1: in einer schematischen Darstellung ein Ausführungsbeispiel einer Ausgestaltung einer einstreifigen Markierung zur Verwendung bei dem erfindungsgemäßen Verfahren,
- Fig. 2: in einer schematischen Darstellung ein Ausführungsbeispiel einer Ausgestaltung einer zweistreifigen Markierung zur Verwendung bei dem erfindungsgemäßen Verfahren,
- Fig. 3: in einer schematischen Darstellung die Szene im unteren Bereich der Fig. 2, jedoch hier mit hellem Hintergrund,
- Fig. 4: in einer schematischen Darstellung ein Ausführungsbeispiel einer Ausge- staltung einer dreistreifigen Markierung zur Verwendung bei dem erfindungsgemäßen Verfahren,
- Fig. 5: in einer schematischen Darstellung die Szene im unteren Bereich der Fig. 4, jedoch hier mit hellem Hintergrund,
- Fig. 6: in einer schematischen Darstellung das Eintreten von Codes in ein Lesefenster des Detektors und
- Fig. 7: in einer schematischen Darstellung die Anordnung von Control-Codes neben einer streifenförmigen Markierung.

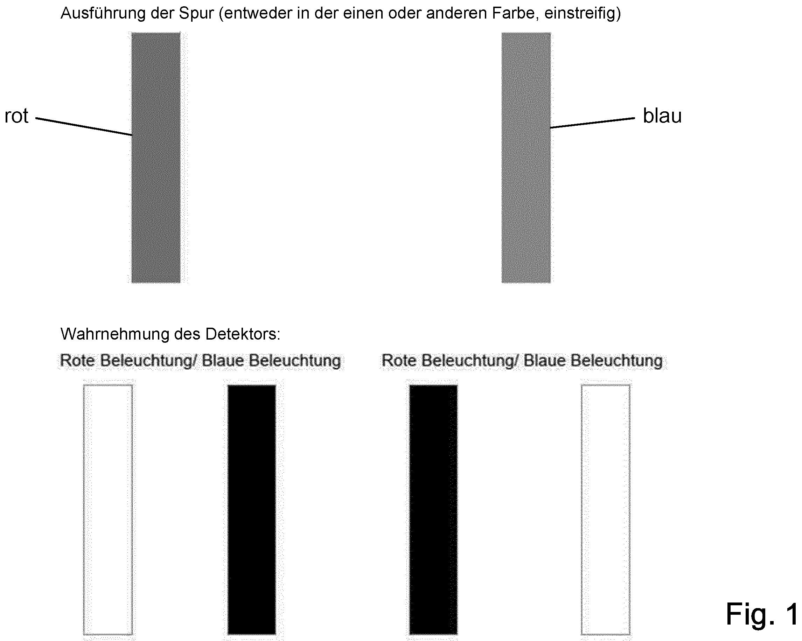

Fig. 1 zeigt in einer schematischen Darstellung ein Ausführungsbeispiel einer einstreifigen Markierung zur Verwendung bei dem erfindungsgemäßen Verfahren, wobei im linken Teil der Fig. 1 eine rötliche Spur und alternativ hierzu im rechten Teil der Fig. 1 eine blaue Spur gezeigt sind. Jeweils im unteren Bereich der Fig. 1 wird gezeigt, wie sich die Wahrnehmung der jeweiligen Spuren bei einerseits roter und andererseits blauer Beleuchtung für einen Detektor mit einer monochromen Kamera darstellt. Bei roter Beleuchtung der rötlichen Spur nimmt der Detektor nichts wahr. Bei blauer Beleuchtung der rötlichen Spur hingegen nimmt der Detektor einen dunklen Streifen wahr. Bei der rechts dargestellten blauen Spur nimmt der Detektor bei blauer Beleuchtung nichts wahr. Bei roter Beleuchtung hingegen nimmt der Detektor einen dunklen Streifen wahr. Die jeweiligen Spuren oder Streifen erstrecken sich entlang einer vorgebbaren Strecke zur Führung eines Fahrzeugs.

Bei wechselnder Beleuchtung mit unterschiedlichem Beleuchtungslicht in unregelmäßiger Reihenfolge - Wechsel von rotem und blauem Beleuchtungslicht - ändert sich die Szene und die Wahrnehmung des Detektors mit jedem Beleuchtungswechsel. Dadurch kann die Markierung oder Spur eindeutig als Markierung oder Spur identifiziert und von "falschen Spuren" oder "Scheinspuren" unterschieden werden.

Bei der Verwendung nur einer Spur bzw. Spurfarbe wird die Spur je nach Beleuchtungsfarbe erkannte oder nicht. Dabei können unterschiedliche geeignete Farben wie beispielsweise SIL-Farben wie bei einem Code-Band verwendet werden. Bei der Verwendung anderer geeigneter Farben ist die Wahrnehmung durch den Detektor je nach Beleuchtungsfarbe ebenfalls unterschiedlich.

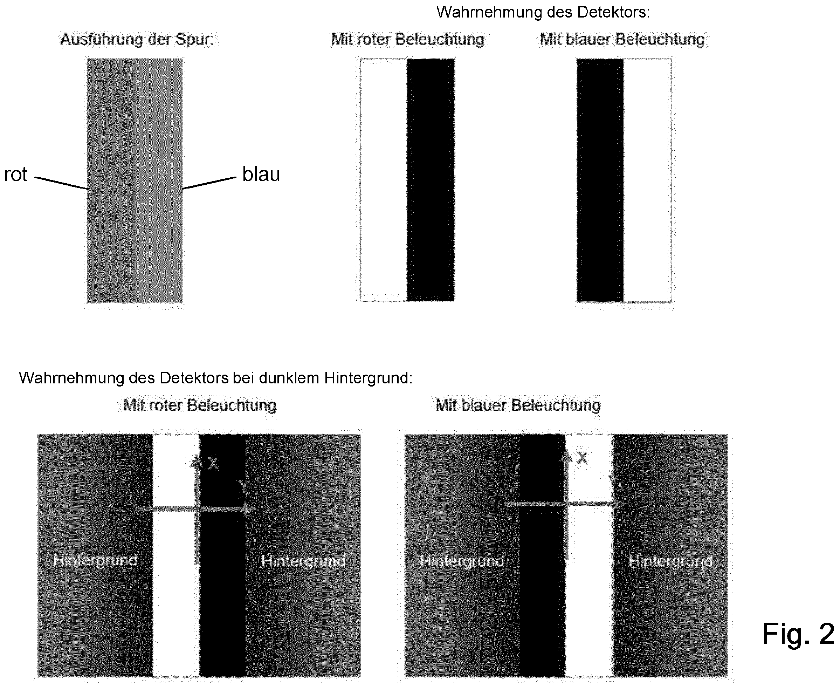

Fig. 2 zeigt in einer schematischen Darstellung ein Ausführungsbeispiel einer Ausgestaltung einer zweistreifigen Markierung zur Verwendung bei dem erfindungsgemäßen Verfahren, wobei hier quasi eine Spur mit einer Kombination aus zwei aneinander angrenzenden einzelnen Streifen realisiert ist, die sich entlang der vorgebbaren Strecke zur Führung des Fahrzeugs erstreckt. Der linke Streifen ist rötlich und der rechte Streifen blau ausgebildet. In Fig. 2 ist des Weiteren die Wahrnehmung der Spur durch einen Detektor mit einer monochromen Kamera bei unterschiedlicher Beleuchtung, nämlich einerseits rotem Beleuchtungslicht und andererseits blauem Beleuchtungslicht, gezeigt. Mit rotem Beleuchtungslicht wird der blaue Streifen als dunkler Streifen wahrgenommen und mit blauem Beleuchtungslicht wird der rötliche Streifen als dunkler Streifen vom Detektor wahrgenommen.

Im unteren Bereich der Fig. 2 ist die Wahrnehmung der Spur durch den Detektor gezeigt, wobei die Spur hierbei auf einem dunklen Hintergrund angeordnet ist. Hierbei kann die Spur anhand eines durch einen Wechsel der Beleuchtung von rotem zu blauem Beleuchtungslicht erzeugten "Sprunges" der Wahrnehmung durch den Detektor - von einem Streifen zum andern Streifen - in eine Y-Richtung eindeutig erkannt werden. Zur eindeutigen Erkennung ist die vorherige Aufnahme mehrerer entsprechender Bilder mit unterschiedlichem Beleuchtungslicht von Nutzen.

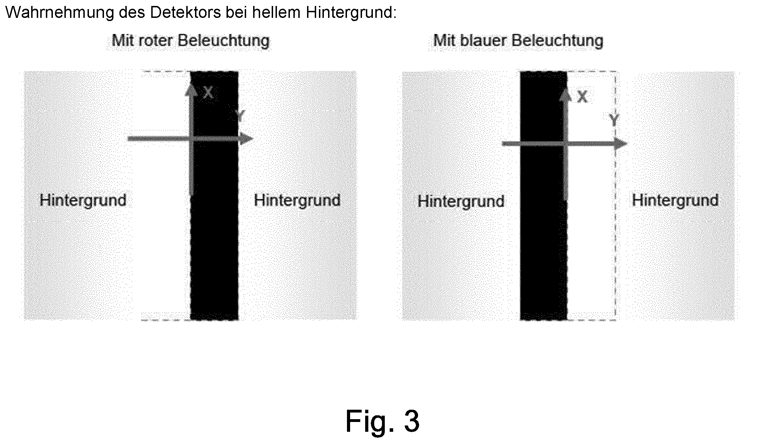

Fig. 3 zeigt in einer schematischen Darstellung die Szene wie im unteren Bereich der Fig. 2, jedoch hier mit hellem Hintergrund. Auch hierbei kann die Spur anhand eines durch einen Wechsel der Beleuchtung von rotem zu blauem Beleuchtungslicht erzeugten "Sprunges" der Wahrnehmung durch den Detektor - von einem Streifen zum andern Streifen - in eine Y-Richtung eindeutig erkannt werden. Zur eindeutigen Erkennung ist auch hier die vorherige Aufnahme mehrerer entsprechender Bilder mit unterschiedlichem Beleuchtungslicht von Nutzen.

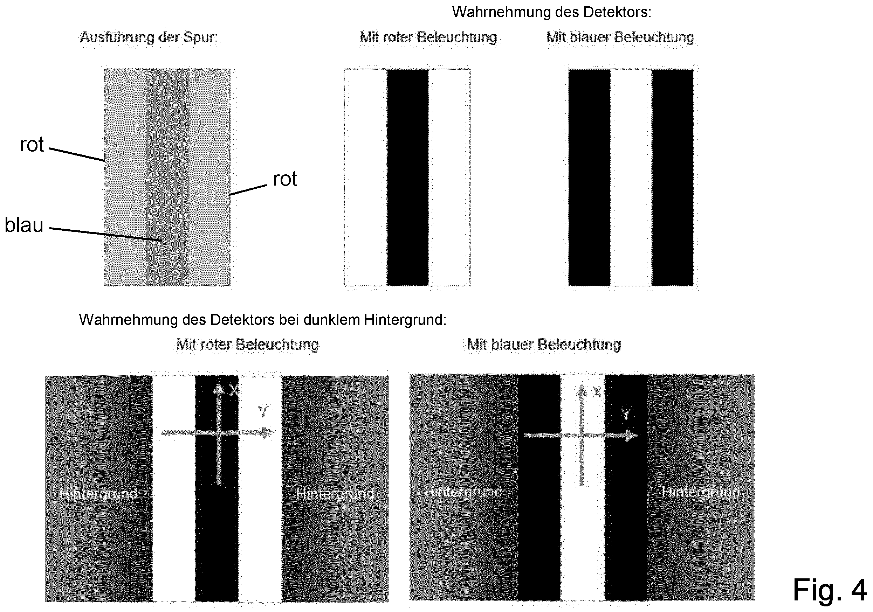

Fig. 4 zeigt in einer schematischen Darstellung ein Ausführungsbeispiel einer Ausgestaltung einer dreistreifigen Markierung zur Verwendung bei dem erfindungsgemäßen Verfahren, wobei hier quasi eine Spur mit einer Kombination aus drei aneinander angrenzenden einzelnen Streifen realisiert ist, die sich entlang der vorgebbaren Strecke zur Führung des Fahrzeugs erstreckt. Der linke Streifen und der rechte Streifen sind rötlich und der mittlere Streifen blau ausgebildet. In Fig. 4 ist des Weiteren die Wahrnehmung der Spur durch einen Detektor mit einer monochromen Kamera bei unterschiedlicher Beleuchtung, nämlich einerseits rotem Beleuchtungslicht und andererseits blauem Beleuchtungslicht, gezeigt. Mit rotem Beleuchtungslicht wird der blaue Streifen als dunkler Streifen wahrgenommen und mit blauem Beleuchtungslicht werden die rötlichen Streifen als dunkle Streifen vom Detektor wahrgenommen.

Im unteren Bereich der Fig. 4 ist die Wahrnehmung der Spur durch den Detektor gezeigt, wobei die Spur hierbei auf einem dunklen Hintergrund angeordnet ist. Hierbei kann die Spur anhand eines durch einen Wechsel der Beleuchtung von rotem zu blauem Beleuchtungslicht erzeugten Wechsels der Wahrnehmung durch den Detektor - von zwei hellen Streifen zu einem hellen Streifen - eindeutig erkannt werden.

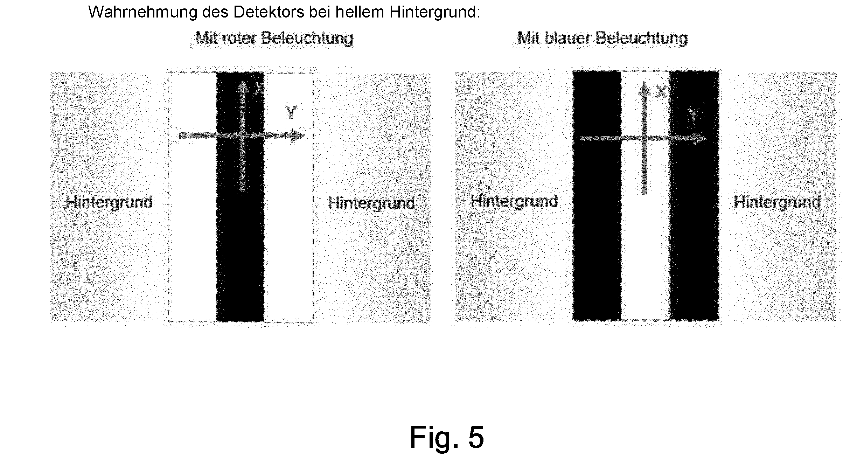

Fig. 5 zeigt in einer schematischen Darstellung die Szene wie im unteren Bereich der Fig. 4, jedoch hier mit hellem Hintergrund. Auch hierbei kann die Spur anhand eines durch einen Wechsel der Beleuchtung von rotem zu blauem Beleuchtungslicht erzeugten Wechsels der Wahrnehmung durch den Detektor - von einem dunklen Streifen zu zwei dunklen Streifen - eindeutig erkannt werden.

Bei einer Ausführung der Spur mit mindestens drei Streifen wird eine Unabhängigkeit von der Farbe des Untergrunds oder Bodens gewährleistet.

Es ist grundsätzlich möglich, eine Spur auch mit mehr als drei Streifen oder Farbstreifen auszuführen. Dies führt zu einem eindeutigeren Abheben vom Hintergrund oder Untergrund. Ebenso kann über unterschiedliche Zusammensetzungen der Spuren oder Farbspuren eine Information codiert werden. Beispielsweise kann der Detektor zurückmelden, wie viele Streifen die Spur enthält und somit eine Information über die jeweilige Strecke weitergeben. Ebenfalls ist eine Codierung über unterschiedliche Breiten der Farbstreifen möglich.

Die Spuren oder Farbspuren können auf unterschiedliche Weise realisiert werden. Beispielsweise kann ein Band, zum Beispiel ein PVC-Band, mit unterschiedlichen Farben bedruckt werden. Alternativ hierzu kann das Band hinsichtlich seines Grundmaterials in einer gewünschten Farbe realisiert sein und mit einer weiteren Farbe bedruckt werden. Eine solche Spur ist günstig und schnell aufzubringen und einfach zu entfernen. Des Weiteren ist eine Kurvenverlegung einfach. Das Band kann auch mittels Polycarbonat realisiert werden.

Alternativ zu einem Band kann eine Spur oder Farbspur durch eine Lackierung mit beispielsweise nebeneinander lackierten Streifen realisiert werden. Im Fall einer Spur mit drei Streifen kann erst die äußere Farbe vollflächig lackiert und dann in der Mitte der Streifen darüber lackiert werden. Eine solche Spur ist dauerhaft, robust und auch bedingt für den Outdoor-Betrieb tauglich.

Als weitere Alternative kann eine Spur durch farbig bedruckte Metallstreifen, beispielsweise Aluminiumstreifen, realisiert werden. Auch hierdurch lässt sich eine dauerhafte Spur bereitstellen. Die Herstellungsmethode kann einen Untereloxaldruck aufweisen.

Als weitere Alternative können beide Spurfarben, d. h. beide Farbstreifen, jeweils als Streifen aus einem Thermoplasten realisiert werden. Diese Streifen werden entsprechend zwei- oder dreistreifig nebeneinandergelegt und durch Erhitzen mit dem Untergrund verschmolzen. Eine Verschmelzung in einer Bodennut ist ebenfalls möglich. Hierdurch wird eine sehr robuste und dauerhafte Markierung realisiert, die auch outdoor-tauglich ist.

Bei einem Ausführungsbeispiel kann eine Spurverfolgung von Farbspuren auf einem Untergrund oder Boden mit einer monochromen Kamera erfolgen. Dabei kann ein Wechselspiel zwischen einer absoluten Positionierung mit einer Code-Anordnung, beispielsweise einem Code Band, und einer Navigation per Farbspur erfolgen.

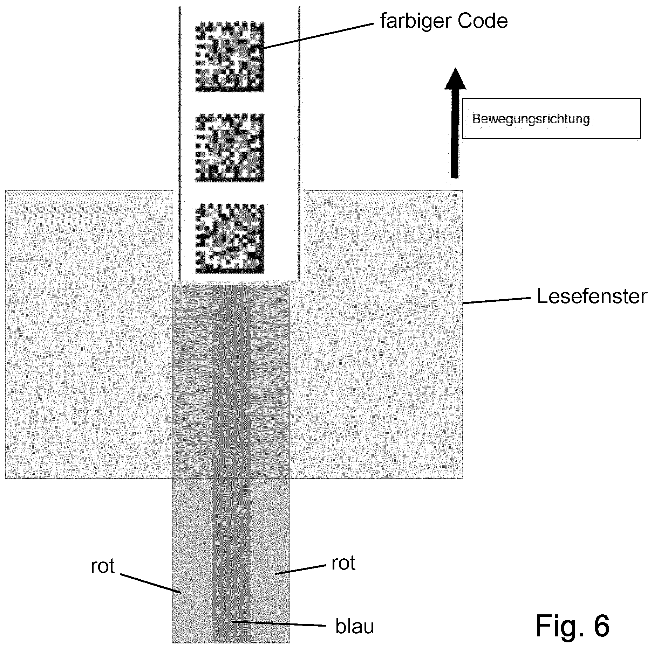

Bei einer Navigation mittels der streifenförmigen Markierung sollte - falls die Performance des Detektors oder Lesekopfs ausreicht - keine Abschaltung der Erkennung für Codes erfolgen, oben eventuell Codes zu erkennen, die in ein Lesefenster des Detektors eintreten. Falls das Fahrzeug entlang der Spur verfährt, tritt im Bildbereich oder Lesefenster des Lesekopfs oder Detektors häufig ganz oben bzw. vorne beim Ende der Spur oder Farbspur ein Code ein. Dieses Szenario ist in Fig. 6 gezeigt. Dabei ist die Spur dreistreifig mit roten Streifen rechts und links und einem blauen Streifen in der Mitte. Die beim Fahren des Fahrzeugs in Bewegungsrichtung vorne in das Lesefenster eintretenden Codes sind farbige Datamatrix-Codes. Hierbei kann der Bildbereich des Detektors oder der Auswerteeinrichtung auf die Endbereiche der Spur oder einen vorderen Bereich des Lesefensters limitiert werden, um Performance zu sparen. Bei Bedarf kann jedoch die Code-Erkennung bei dieser Navigation oder Führung anhand der streifenförmigen Markierung vollständig deaktiviert werden, um die volle Performance des Detektors oder Lesekopf für die Spurverfolgung zu nutzen.

Spätestens, wenn beispielsweise im oberen Drittel oder in einem anderen Abschnitt des Lesefensters keine durchgehende Spur oder streifenförmigen Markierung mehr erkannt wird, kann die Code-Erkennung bzw. Führung des Fahrzeugs mittels der Code-Anordnung aktiviert werden und ein gültiger oder geeigneter Code gesucht werden. Wird ein gültiger oder geeigneter Code erkannt, kann die Spurerkennung oder die Führung des Fahrzeugs mittels der streifenförmigen Markierung deaktiviert oder abgeschaltet werden.

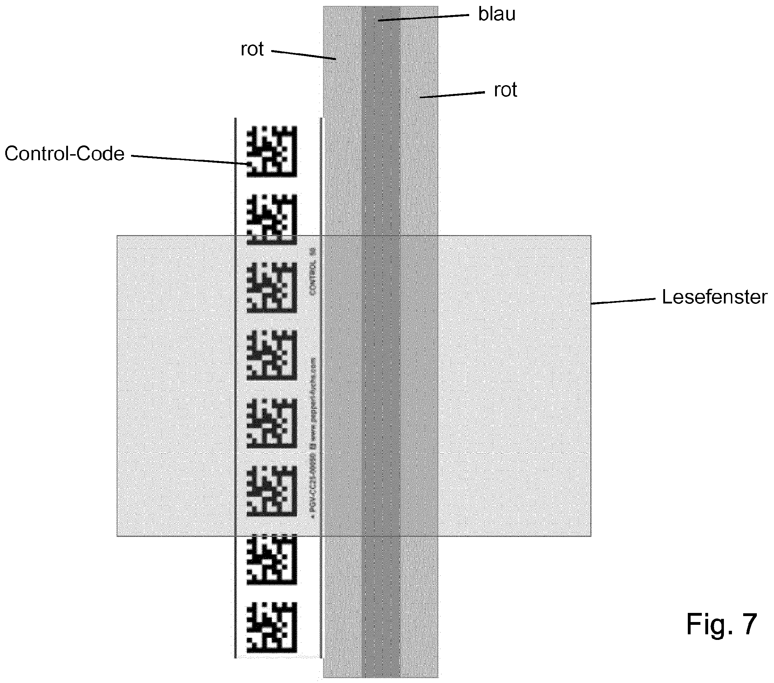

Fig. 7 zeigt eine Anordnung von sogenannten Control-Codes neben einer streifenförmigen Markierung, die links und rechts jeweils einen roten Streifen und in der Mitte einen blauen Streifen aufweist. Diese Control-Codes sind seitlich der streifenförmigen Markierung oder Farbspur in einem vorgebbaren Abstand angeordnet. Somit ist hier ebenfalls eine Beschränkung der Code-Erkennung auf vorgebbare Bereiche links und/oder rechts der streifenförmigen Markierung möglich, um Ressourcen des Detektors oder Lesekopfs zu sparen.

Hinsichtlich weiterer vorteilhafter Ausgestaltungen des erfindungsgemäßen Verfahrens sowie der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

## Patentansprüche

1. Verfahren zur Führung eines Fahrzeugs auf einem Untergrund, wobei das Fahrzeug mittels einer auf dem Untergrund zumindest abschnittsweise angeordneten Code-Anordnung, die einen oder mehrere Codes aufweist, und/oder wobei das Fahrzeug mittels einer auf dem Untergrund zumindest abschnittsweise angeordneten streifenförmigen Markierung, die eine Spur oder mehrere Spuren aufweist, und mittels eines zur Erkennung der Code-Anordnung und/oder der streifenförmigen Markierung ausgebildeten und dem Fahrzeug zugeordneten Detektors entlang einer vorbestimmbaren Strecke geführt wird, wobei eine Führung des Fahrzeugs mittels der Code-Anordnung und/oder eine Führung des Fahrzeugs mittels der streifenförmigen Markierung - in Abhängigkeit von mindestens einem vorgebbaren Parameter - durch eine Steuereinrichtung aktiviert oder deaktiviert wird,
**dadurch gekennzeichnet, dass** durch die Steuereinrichtung die Erkennung der Code-Anordnung deaktiviert wird, falls eine Führung des Fahrzeugs mittels der streifenförmigen Markierung erfolgt, und dass durch die Steuereinrichtung die Erkennung der Code-Anordnung aktiviert wird, sobald zumindest in einem definierbaren Teilbereich eines Lesefensters des Detektors keine durchgehende streifenförmige Markierung oder keine streifenförmige Markierung erkannt wird.

2. Verfahren nach Anspruch 1, **dadurch gekennzeichnet, dass** durch die Steuereinrichtung die Erkennung der Code-Anordnung vor der Erkennung der streifenförmigen Markierung priorisiert wird oder umgekehrt.

3. Verfahren nach Anspruch 1 oder 2, **dadurch gekennzeichnet, dass** durch die Steuereinrichtung die Erkennung der streifenförmigen Markierung durch den Detektor aktiviert wird, sobald der Detektor keinen Code mehr erkennt.

4. Verfahren nach einem der Ansprüche 1 bis 3, **dadurch gekennzeichnet, dass** durch die Steuereinrichtung die Erkennung der streifenförmigen Markierung deaktiviert wird, sobald der Detektor einen oder mehrere Codes erkennt.

5. Verfahren nach einem der Ansprüche 1 bis 4, **dadurch gekennzeichnet, dass** ein Bildbereich oder Erkennungsbereich des Detektors für einen oder mehrere Codes - vorzugsweise während einer Führung des Fahrzeugs mittels der streifenförmigen Markierung - auf einen Endbereich der streifenförmigen Markierung oder einen - in einer Fahrtrichtung des Fahrzeugs entlang der Strecke gesehen - vorderen Bereich eines Lesefensters des Detektors begrenzt wird.

6. Verfahren nach Anspruch 5, **dadurch gekennzeichnet, dass** die Begrenzung mittels der Steuereinrichtung erfolgt.

7. Verfahren nach einem der Ansprüche 1 bis 6, **dadurch gekennzeichnet, dass** durch die Steuereinrichtung eine Erkennung von Codes durch den Detektor nur in einem - in einer Fahrtrichtung des Fahrzeugs entlang der Strecke gesehen - linken und/oder rechten Bereich eines Lesefensters des Detektors aktiviert wird.

8. Verfahren nach einem der Ansprüche 1 bis 7, **dadurch gekennzeichnet, dass** zur Erkennung der Markierung auf dem Untergrund die Code-Anordnung und/oder die Markierung mittels einer Beleuchtungseinrichtung mit einem ersten Beleuchtungslicht und einem zweiten Beleuchtungslicht unterschiedlicher Wellenlänge und jeweils vorgebbarer Zeitdauer in einer vorgebbaren Reihenfolge beleuchtet wird, dass die Wellenlänge des ersten Beleuchtungslichts und die Wellenlänge des zweiten Beleuchtungslichts derart gewählt werden, dass die Code-Anordnung und/oder die Markierung für den Detektor aufgrund ihres definierbaren Remissionsspektrums bei Beleuchtung mit dem ersten Beleuchtungslicht mit einer Helligkeit oder Dunkelheit erkennbar ist, die sich von der Helligkeit oder Dunkelheit bei Beleuchtung mit dem zweiten Beleuchtungslicht unterscheidet, und
dass ein durch den Detektor ermitteltes entsprechendes Detektionsergebnis zur Führung des Fahrzeugs entlang der Strecke verwendet wird.

9. Verfahren nach Anspruch 8, **dadurch gekennzeichnet, dass** anhand des Detektionsergebnisses bestimmt wird, ob sich das Fahrzeug noch in einem definierbaren räumlichen oder flächigen Bereich um die Code-Anordnung und/oder die Markierung oder noch in einem definierbaren Abstand zur Code-Anordnung und/oder Markierung befindet.

10. Verfahren nach einem der Ansprüche 1 bis 9, **dadurch gekennzeichnet, dass** der Detektor eine monochrome Kamera aufweist.

11. Verfahren nach einem der Ansprüche 1 bis 10, **dadurch gekennzeichnet, dass** der Code ein Datamatrix-Code ist oder die Codes Datamatrix-Codes sind.

12. Vorrichtung zur Führung eines Fahrzeugs auf einem Untergrund, insbesondere zur Durchführung des Verfahrens nach einem der Ansprüche 1 bis 11, wobei das Fahrzeug mittels einer auf dem Untergrund zumindest abschnittsweise angeordneten Code-Anordnung, die einen oder mehrere Codes aufweist, und/oder wobei das Fahrzeug mittels einer auf dem Untergrund zumindest abschnittsweise angeordneten streifenförmigen Markierung, die eine Spur oder mehrere Spuren aufweist, und mittels eines zur Erkennung der Code-Anordnung und/oder der Markierung ausgebildeten und dem Fahrzeug zugeordneten Detektors entlang einer vorbestimmbaren Strecke führbar ist, wobei eine Führung des Fahrzeugs mittels der Code-Anordnung und/oder mittels der streifenförmigen Markierung - in Abhängigkeit von mindestens einem vorgebbaren Parameter - durch eine Steuereinrichtung aktivierbar oder deaktivierbar ist,
**dadurch gekennzeichnet, dass** durch die Steuereinrichtung die Erkennung der Code-Anordnung deaktivierbar ist, falls eine Führung des Fahrzeugs mittels der streifenförmigen Markierung erfolgt, und dass durch die Steuereinrichtung die Erkennung der Code-Anordnung aktivierbar ist, sobald zumindest in einem definierbaren Teilbereich eines Lesefensters des Detektors keine durchgehende streifenförmige Markierung oder keine streifenförmige Markierung erkannt wird.

## Claims

1. A method for guiding a vehicle on an underlying surface, wherein the vehicle is guided along a predeterminable route by means of a code arrangement, which is arranged at least in one or more sections on the underlying surface and which comprises one or more codes, and/or wherein the vehicle is guided along a predeterminable route by means of a strip-shaped marking, which is arranged at least in one or more sections on the underlying surface and which comprises one track or multiple tracks, and by means of a detector designed to recognize the code arrangement and/or the strip-shaped marking and assigned to the vehicle, wherein a guidance of the vehicle by means of the code arrangement and/or a guidance of the vehicle by means of the strip-shaped marking is activated or deactivated by a control unit - depending on at least one pre-definable parameter,
**characterized in that** the identification of the code arrangement is deactivated by the control unit if the vehicle is guided by means of the strip-shaped marking, and that the identification of the code arrangement is activated by the control unit as soon as a continuous strip-shaped marking or a strip-shaped marking is not identified at least in a defined section of the reading window of the detector.

2. The method as claimed in claim 1, **characterized in that** the identification of the code arrangement is prioritized over the identification of the strip-shaped marking or vice versa by the control unit.

3. The method as claimed in claim 1 or 2, **characterized in that** the identification of the strip-shaped marking by the detector is activated by the control unit as soon as the detector no longer identifies a code.

4. The method as claimed in any one of claims 1 to 3, **characterized in that** the identification of the strip-shaped marking is deactivated by the control unit as soon as the detector identifies one or more codes.

5. The method as claimed in any one of claims 1 to 4, **characterized in that** an image area or identification area of the detector for one or more codes - preferably during guidance of the vehicle by means of the strip-shaped marking - is limited to an end area of the strip-shaped marking or a front area - viewed in a direction of travel of the vehicle along the route - of a reading window of the detector.

6. The method as claimed in claim 5, **characterized in that** the limiting is carried out by means of the control unit.

7. The method as claimed in any one of claims 1 to 6, **characterized in that** an identification of codes by the detector is activated by the control unit only in a left and/or right area - viewed in a direction of travel of the vehicle along the route - of a reading window of the detector.

8. The method as claimed in any one of claims 1 to 7, **characterized in that** to identify the marking on the underlying surface, the code arrangement and/or the marking is illuminated by means of an illumination unit using a first illumination light and a second illumination light of different wavelengths and respectively pre-definable duration in a pre-definable sequence,
the wavelength of the first illumination light and the wavelength of the second illumination light are selected such that the code arrangement and/or the marking is identifiable by the detector due to its definable remission spectrum upon illumination using the first illumination light with a lightness or darkness which differs from the lightness or darkness upon illumination using the second illumination light, and
a corresponding detection result determined by the detector is used for guiding the vehicle along the route.

9. The method as claimed in claim 8, **characterized in that** it is determined on the basis of the detection result whether the vehicle is still located in a definable spatial or planar area around the code arrangement and/or the marking or is still located at a definable distance to the code arrangement and/or marking.

10. The method as claimed in any one of claims 1 to 9, **characterized in that** the detector includes a monochromatic camera.

11. The method as claimed in any one of claims 1 to 10, **characterized in that** the code is a data matrix code or the codes are data matrix codes.

12. A device for guiding a vehicle on an underlying surface, in particular for carrying out the method as claimed in any one of claims 1 to 11, wherein the vehicle can be guided along a predeterminable route by means of a code arrangement, which is arranged at least in one or more sections on the underlying surface and which comprises one or more codes, and/or wherein the vehicle can be guided along a predeterminable route by means of a strip-shaped marking, which is arranged at least in one or more sections on the underlying surface and which comprises one track or multiple tracks, and by means of a detector designed to recognize the code arrangement and/or the strip-shaped marking and assigned to the vehicle, wherein a guidance of the vehicle by means of the code arrangement and/or a guidance of the vehicle by means of the strip-shaped marking is activated or deactivated by a control unit - depending on at least one pre-definable parameter,
the identification of the code arrangement is deactivatable by the control unit if the vehicle is guided by means of the strip-shaped marking, and the identification of the code arrangement is activatable by the control unit as soon as a continuous strip-shaped marking or a strip-shaped marking is not identified at least in a defined section of a reading window of the detector.

## Revendications

1. Procédé de guidage d'un véhicule sur un sol, dans lequel le véhicule est guidé, le long d'une trajectoire prédéterminée, au moyen d'un dispositif de code, disposé au moins à certains endroits sur le sol, qui comprend un ou plusieurs codes et/ou dans lequel le véhicule est guidé au moyen d'un marquage sous forme de bandes, disposé au moins à certains endroits sur le sol, qui comprend une ou plusieurs pistes et au moyen d'un détecteur conçu pour la détection du dispositif de code et/ou du marquage sous forme de bandes et qui correspond au véhicule, dans lequel un guidage du véhicule au moyen du dispositif de code et/ou un guidage du véhicule au moyen du marquage sous forme de bandes est activé ou désactivé en fonction d'au moins un paramètre pouvant être prédéterminé,
**caractérisé en ce que** le dispositif de commande permet de désactiver le dispositif de code dans le cas où un guidage du véhicule est effectué au moyen du marquage sous forme de bandes et **en ce que** le dispositif de commande permet d'activer la détection du dispositif de code dès que, au moins dans une partie définie d'une fenêtre de lecture du détecteur, aucun marquage continu sous forme de bande ou aucun marquage sous forme de bandes n'est détecté.

2. Procédé selon la revendication 1, **caractérisé en ce que** le dispositif de commande permet de prioriser la détection du dispositif de code par rapport à la détection du marquage sous forme de bandes ou inversement.

3. Procédé selon la revendication 1 ou 2, **caractérisé en ce que** le dispositif de commande permet d'activer la détection du marquage sous forme de bandes par le détecteur dès que le détecteur ne détecte plus aucun code.

4. Procédé selon l'une des revendications 1 à 3, **caractérisé en ce que** le dispositif de commande permet de désactiver la détection du marquage sous forme de bandes dès que le détecteur détecte un ou plusieurs codes.

5. Procédé selon l'une des revendications 1 à 4, **caractérisé en ce qu'**une zone d'image ou zone de détection du détecteur pour un ou plusieurs codes est limitée, de préférence pendant un guidage du véhicule au moyen du marquage sous forme de bandes, à une zone terminale du marquage sous forme de bandes ou une zone avant, dans une direction de déplacement du véhicule le long de la trajectoire, d'une fenêtre de lecture du détecteur.

6. Procédé selon la revendication 5, **caractérisé en ce que** la limitation est effectuée par le dispositif de commande.

7. Procédé selon l'une des revendications 1 à 6, **caractérisé en ce que** le dispositif de commande permet d'activer une détection de codes par le détecteur uniquement dans une zone gauche et/ou droite, dans une direction de déplacement du véhicule le long de la trajectoire, d'une fenêtre de lecture du détecteur.

8. Procédé selon l'une des revendications 1 à 7, **caractérisé en ce que**, pour la détection du marquage sur le sol, le dispositif de code et/ou le marquage est éclairé au moyen d'un dispositif d'éclairage avec une première lumière d'éclairage et une deuxième lumière d'éclairage de longueurs d'ondes différentes et de durées respectives prédéterminées, dans un ordre prédéterminé,
la longueur d'onde de la première lumière d'éclairage et la longueur d'onde de la deuxième lumière d'éclairage sont choisies de sorte que le dispositif de code et/ou le marquage peuvent être détectés, pour le détecteur, sur la base de leur spectre de rémission lors de l'éclairage avec la première lumière d'éclairage avec une luminosité ou obscurité différente de la luminosité ou de l'obscurité lors d'un éclairage avec la deuxième lumière d'éclairage et
un résultat de détection correspondant déterminé par le détecteur est utilisé pour le guidage du véhicule le long de la trajectoire.

9. Procédé selon la revendication 8, **caractérisé en ce que**, à l'aide du résultat de détection, il est déterminé si le véhicule se trouve encore dans une zone spatiale ou plane pouvant être définie autour du dispositif de code et/ou du marquage ou encore à une distance, pouvant être définie, du dispositif de code et/ou du marquage.

10. Procédé selon l'une des revendications 1 à 9, **caractérisé en ce que** le détecteur comprend une caméra monochrome.

11. Procédé selon l'une des revendications 1 à 10, **caractérisé en ce que** le code est un code à matrice de données ou les codes sont des codes à matrices de données.

12. Dispositif de guidage d'un véhicule sur un sol, plus particulièrement pour l'exécution du procédé selon l'une des revendications 1 à 11, dans lequel le véhicule peut être guidé, le long d'une trajectoire pouvant être prédéterminée, au moyen d'un dispositif de code, disposé au moins à certains endroits sur le sol, qui comprend un ou plusieurs codes et/ou dans lequel le véhicule est guidé au moyen d'un marquage sous forme de bandes, disposé au moins à certains endroits sur le sol, qui comprend une ou plusieurs pistes et au moyen d'un détecteur conçu pour la détection du dispositif de code et/ou du marquage sous forme de bandes, dans lequel un guidage du véhicule au moyen du dispositif de code et/ou au moyen du marquage sous forme de bandes peut être activé ou désactivé par un dispositif de commande en fonction d'au moins un paramètre pouvant être prédéterminé,
**caractérisé en ce que** le dispositif de commande permet de désactiver la détection du dispositif de code si un guidage du véhicule au moyen du marquage sous forme de bandes est effectué et le dispositif de commande permet d'activer la détection du dispositif de code dès que, au moins dans une partie, pouvant être définie, d'une fenêtre de lecture du détecteur, aucun marquage continu sous forme de bandes ou aucun marquage sous la de bandes n'est détecté.
